(19) Europäisches Patentamt
European Patent Office
Office européen des brevets

(11) **EP 1 168 699 A2**

(12) **EUROPEAN PATENT APPLICATION**

(43) Date of publication:
**02.01.2002 Bulletin 2002/01**

(51) Int Cl.⁷: **H04L 1/00**

(21) Application number: **01113506.8**

(22) Date of filing: **11.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.06.2000 US 599149**

(71) Applicant: **TRW Inc.**
**Redondo Beach, California 90278 (US)**

(72) Inventors:
• **Jue, Reginald**
 **Manhattan Beach, CA 90266 (US)**

• **Yousefi, Esmaell**
 **Manhattan Beach, CA 90266 (US)**
• **Cooper, Scott A.**
 **Torrance, CA 90505 (US)**
• **Wright, David A.**
 **Hermosa Beach, CA 90254 (US)**

(74) Representative: **Schmidt, Steffen J., Dipl.-Ing.**
**Wuesthoff & Wuesthoff, Patent- und**
**Rechtsanwälte, Schweigerstrasse 2**
**81541 München (DE)**

(54) **Common downlink frame length for differing code rates with hopping waveform**

(57) A frame coding module (300) includes a data coder (322) having a code selection input (318) and a downlink frame organizer (314) connected to the data coder (322). The downlink frame organizer (314) is configured to produce a fixed size downlink frame (100) characterized by a frame length constant. A control bus (316) couples to the code selection input (318). The control bus (316) carries a first code selection signal for first payload data, and a second code selection signal for second payload data. The data coder (322) is responsive to the code selection input (318) to produce coded first payload data having a first coded length and coded second payload data having a second coded length. The frame organizer (314) may then insert the coded first payload data, the coded second payload data, and overhead data in a downlink frame (100) of size equal to the predetermined fixed downlink frame size.

FIG. 1

**Description**

BACKGROUND OF THE INVENTION

The present invention relates to error detection and correction coding of digital data. In particular, the present invention relates to coding of payloads in satellite downlink frames.

Modern satellites produce spot beam downlinks organized into time division multiplexed (TDM) frames. Hopping downlink beams, in particular, must be broken up into downlink frames with a fixed overhead required per hop. In general, the frames include an overhead section and a payload section. The overhead section includes, for example, a guard band and synchronization bits while the payload section carries the "billable" data bits destined for end users. Thus, the overhead section, while necessary in some respects, limits the efficiency of the downlink. Thus every overhead section transmitted (i.e., every frame transmitted) takes the place of "billable" data.

In a frame, the payload is coded to ensure that a ground terminal can decode and error correct the vast majority of errors that may arise in the payload after transmission. In the past, payload data was outer coded (e.g., with a block code) as well as inner coded (e.g., with a convolutional code) to provide robust protection for the payload data. The sequence of outer coding followed by inner coding is generally referred to as concatenated coding. Additional redundancy in coded bits provides for higher coding gain and thus the ability to correct more error per code block. Both block codes and convolutional codes may be designed to output a specific number of coded bits for a given code rate and a given set of input bits. In modern systems utilizing higher link frequencies, atmospheric attenuation is sensitive to local weather conditions and varies more widely than past systems. Modern systems use adaptive coding in which additional code redundancy is added as needed by employing a lower rate code; however, this leads to variable block lengths.

For efficiency reasons, however, it is highly desirable to provide a fixed length downlink frame. Not only is satellite hardware designed to generate fixed length frames, but the ground terminals are, of course, also adapted to receive fixed length frames. Also, for hopping beams, it is desirable to have all hopes the same duration so that multiple downlink beams can coordinate hop patterns and minimize interference between beams. Varying from a fixed length frame results in additional hardware and software complexity for both the satellite and every ground terminal in communication with the satellite, as well as wasted capacity resulting from attempting to coordinate hop patterns between distinct hopping beams with variable frame lengths.

Thus, the downlink frame structures of past satellite systems were generally limited not only in their selection of codes for the payload, but also in their construction of single header, single payload downlink frames built using the payload. Such systems do not provide for adaptive coding within the constraints of fixed frame lengths as required for a hopped downlink waveform.

A need exists in the industry for a method and apparatus for coding frames that addresses the problems noted above and others previously experienced.

BRIEF SUMMARY OF THE INVENTION

A preferred embodiment of the present invention provides a method for coding a multiple payload frame, with variable code rates for each payload, while maintaining a fixed frame size. The method first establishes a frame length constant representing a fixed downlink frame size. The method then codes a first payload data according to a first code. The result is coded first payload data that has a fixed coded length. The method inserts the coded first payload data in the downlink frame.

The method also codes second payload data according to a second code. The result is a coded second payload data that has a coded length equal to the coded length of the first payload. The second coded payload data is also inserted into the downlink frame. In addition, the method inserts overhead data in the downlink frame along with the first and second coded payload data. Because the coded payload lengths are always equal, the downlink frame must also be equal in size to the fixed downlink frame size. In other words, while the first and second codes may vary between payloads, the frame sized stays constant.

To this end, the method may, for example, establish a payload length constant representing a fixed total payload size inside the downlink frame. The sum of the first coded length and the second coded length is then maintained equal to the fixed total payload size. In other words, the total amount of payload in the downlink frame remains constant, but may be shared between multiple payloads, or distributed equally among payloads. An extension of this invention provides for payloads of differing lengths, under the constraints that the sum of all payloads be a constant, so that the downlink frame length be maintained. For example, in the case in which the traffic load is skewed in favor of one code rate, the length of the payload using that code rate may be larger, provided that the other payloads in that frame are correspondingly shorter.

The method may also inform the ground terminal of the manner in which the downlink frame is coded. In one embodiment, the method inserts into the downlink frame a first overhead section associated with the first payload and a second overhead section associated with the second payload. Either of the overhead sections may then include code identifiers indicative of the first code and second codes. In an extension of the basic invention, the first and second payloads may vary in length. In that case, the code identifiers may indicate the length of the payloads in addition to the code rates.

A preferred embodiment of the present invention also provides a frame coding module. The frame coding module includes a data coder having a code selection input and a downlink frame organizer connected to the data coder. The downlink frame organizer is configured to produce a fixed size downlink frame characterized by a frame length constant. A control bus is provided and coupled to the code selection input.

The control bus carries a first code selection signal for first payload data, and a second code selection signal for second payload data. The data coder is responsive to the code selection input to produce coded first payload data having a first coded length and coded second payload data having a second coded length. The frame organizer may then insert the coded first payload data, the coded second payload data, and overhead data in a downlink frame of size equal to the predetermined fixed downlink frame size.

The downlink frame manifests itself physically as a frame signal that includes at least a first header signal, a first payload signal, and a second payload signal. The frame signal may then include a first payload signal that bears coded first payload data. The coded first payload data has a first coded length and is prepared in accordance with a first code. Similarly, the frame signal includes a second payload signal that bears coded second payload data having a second coded length and prepared in accordance with a second code that is different than the first code. The first header signal, first payload signal, and second payload signal are encapsulated into a single frame.

BRIEF DESCRIPTION OF THE DRAWINGS

Figure 1 illustrates an exemplary multiple payload frame signal for the specific case of two payloads per frame.

Figure 2 shows several downlink frames employing a fixed downlink frame size, and a fixed total payload size.

Figure 3 shows a frame coding and processing module.

Figure 4 illustrates a method for independently coding different payloads in a multiple payload frame.

Figure 5 illustrates an example of a rate 3/4 punctured convolutional inner code.

Figure 6 illustrates an example of a rate 3/8 punctured convolutional inner code.

DETAILED DESCRIPTION OF THE INVENTION

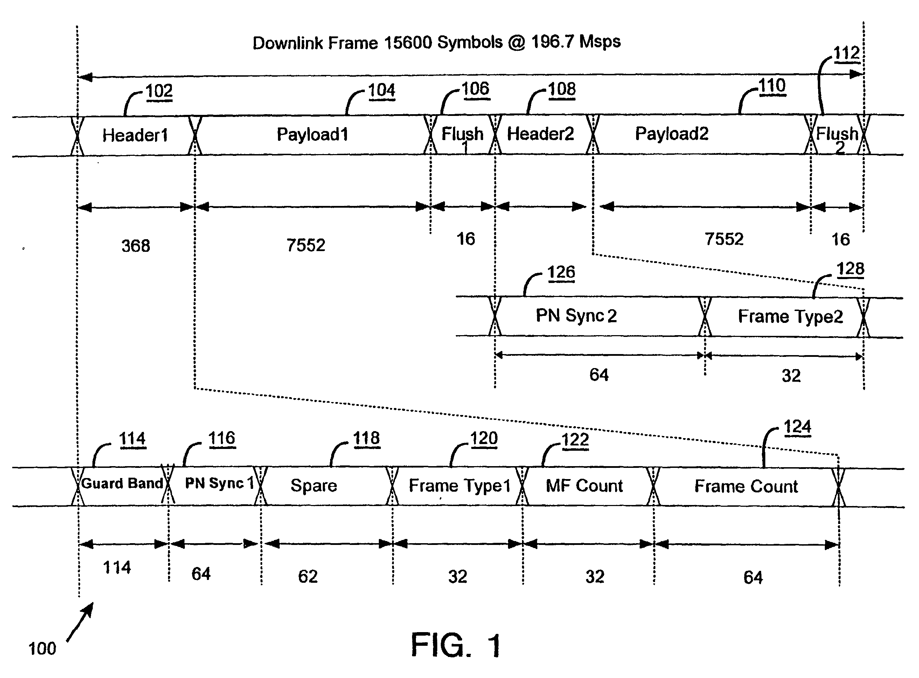

Turning now to Figure 1, that figure illustrates a multiple payload frame signal 100. The frame signal 100 includes a first header field 102 followed by a first payload field 104 and a first flush field 106. In addition, the frame signal 100 includes a second header field 108 followed by a second payload field 110 and a second flush field 112. The first header field 102, first payload field 104, first flush field 106, second header field 108, second payload field 110, and second flush field 112 are all encapsulated into the single frame 100.

Continuing with reference to Figure 1, the first header field 102 is composed of several subfields. In particular, the first header field 102 includes a hopping beam guard band 114, a first payload pseudorandom noise (PN) synchronization field 116, and a spare field 118. The first header field 102 also includes a first frame type field 120, a masterframe count field 122, and a subframe count field 124.

The second header section includes a smaller set of subfields, namely, the second PN synchronization field 126 and the second frame type field 128.

Table 1, below, shows the preferred length and modulation of each field. Downlink symbols are preferably transmitted at 196.7 megasymbols per second.

Table 1

| Field | Symbols | Modulation |
|---|---|---|
| first header 102 | 368 | |

Table 1 (continued)

| Field | Symbols | Modulation |
|---|---|---|
| hopping beam guard band 114 | 114 | BPSK |
| first payload PN synch 116 | 64 | BPSK |
| spare 118 | 62 | BPSK |
| first frame type 120 | 32 | BPSK |
| masterframe count 122 | 32 | BPSK |
| subframe count 124 | 64 | BPSK |
| first payload 104 | 7552 | QPSK |
| first flush 106 | 16 | QPSK |
| second header 108 | 96 | |
| second payload PN synch 126 | 64 | BPSK |
| second frame type 128 | 32 | BPSK |
| second payload 110 | 7552 | QPSK |
| second flush 112 | 16 | QPSK |
| TOTAL LENGTH | 15600 | |

The hopping beam guard band 114 provides guard time to allow the satellite to redirect a downlink beam (i. e., "hop" the beam) to a different geographic area. The first PN synchronization field 116 and the second PN synchronization field provide synchronization bits for earth terminals. The subframe count field 124 counts individual frames as they are transmitted. Preferably, the subframe count field 124 includes a 16 bit downlink frame count appended with 8 zeros and convolutionally encoded with a relatively heavy (e.g., 3/8 rate) code. When the subframe count field 124 reaches 9328, for example, the masterframe count field 122 increments. The masterframe count rolls over after reaching its maximum value (0xFFFFFFFF), although it may be reset or preprogrammed at any time.

The spare field 118 may be drawn from to provide subsequent enhancements to the frame 100 (e.g., additional synchronization bits or payload length information in the case in which the payload length is variable). Preferably, the spare field 118, the hopping beam guard band 114, and first PN synchronization field 116 are filled with PN bits that are generated by a PN synchronization sequence generator.

The first frame type field 120 generally indicates characteristics of the first payload field 104, while the second frame type field 128 generally indicates characteristics of the second payload field 110. The frame type field may be coded using a rate 1/2 block code, such as an (8,4) Reed-Muller Code. Several examples of codes for the first and second frame type fields 120, 128 are illustrated below in Table 2.

Table 2

| Frame Type | Uncoded Value | Coded Value |
|---|---|---|
| Light Coding (Rate 3/4 Inner Code) | 110 | 00111100 |
| Heavy Coding (Rate 3/8 Inner Code) | 011 | 10010110 |
| Frame Gate | 001 | 10100101 |
| Power Gate | 000 | 11110000 |

Additional inner code rates may be represented using the remaining available bit assignments for the "Uncoded Values," and the corresponding Reed-Muller representing for the "Coded Value." Although the light coding, heavy coding, and power gating options are with reference to a payload itself, the frame gate option indicates power gating of an entire frame (i.e., all 15600 symbols). To preserve the integrity of the frame type field, each coded value is preferably repeated four times in the frame type field. For example, a frame type of 00111100 00111100 00111100 00111100 in the first frame type field 120 provides a code identifier that indicates that the first payload field 104 is lightly coded. As another example, a frame type of 10010110 10010110 10010110 10010110 in the second frame type field 128 provides a code identifier that indicates that the second payload field 110 is heavily coded.

The frame signal 100 delivers multiple payloads (in the preferred embodiment, two payloads) in a single frame. Although a first header field 102 is provided as well as a second header field 108, the second header field 108 is smaller than the first header field 102. In particular, the second header field does not repeat the hopping beam guard band 114 (since the receiver(s) for the first and second payload fields 104, 110 are in the same beam spot for the current hop location), spare field 118, masterframe count 122 and subframe count 124 (since only one count is needed for the single multiple payload frame).

As a result, the frame 100 delivers two payloads in a single frame with less overhead than would be incurred by transmitting two single payload frames. Throughput is therefore higher. The specific frame format 100 shown in Figure 1 may be generalized to a single N payload N header frame, under the general condition that the sum of the overhead arising from the N headers is less than the sum of the overhead arising from N individual single payload frames.

The first and second payload fields 104, 110 carry the "billable" data to the earth terminals. The first and second payload fields 104, 110 are typically concatenated coded using an inner convolutional code. The first and second flush fields 106, 112 are provided as a means to flush the last of the "billable" bits from the spacecraft encoders, providing the earth terminal convolutional decoders opportunity to decode the entire burst.

The frame 100 supports many combinations of coding rates selectable on a per payload basis. With regard to the heavy coding and light coding mentioned above, as examples, lightly coded first payload data may be produced by a 3/4 rate, constraint length 7, punctured convolutional coding of 1416 Reed-Solomon block coded bytes generated from 24 53-byte ATM cells. Heavily coded second payload data may be produced by a 3/8 rate, constraint length 7, punctured convolutional coding of 708 Reed-Solomon block coded bytes generated from 12 53-byte ATM cells. Thus, the first and second payload fields remain the same size (7552 symbols) under both coding rates. Other combinations of outer codes, inner codes, and blocks of original data may also be used to provide consistently sized payloads.

In general, the frame 100 is characterized by a fixed downlink frame size. For the frame 100, the fixed downlink frame size is 15600 symbols. Similarly, the frame 100 carries a fixed total payload size of 15,104 symbols broken into two equal size 7552 symbol payloads. The first and second payload fields 104, 110 need not remain fixed in sized, however, nor is the frame 100 restricted to only two payloads. Rather, the discussion below is applicable to N payloads in a single frame.

While the downlink frame is preferably maintained at a constant size with a fixed total payload size, different code rates may be used to code different payloads (which may or may not vary in size) in the downlink frame. Custom code rates permit adequate coding to counter local weather conditions or terminal location/size as needed for the intended recipient(s) of that payload. In other words, there are, for example, many outer codes and many inner codes that may be applied to payload data, and the individual coded payload data lengths need not be the same under all combinations. Thus, one payload may either grow or shrink in size, or a portion of one payload may be allocated to another payload to accommodate independently coded payload data. Generally, however, the sum of the size of all the coded payload data is equal to the total payload size, which remains fixed.

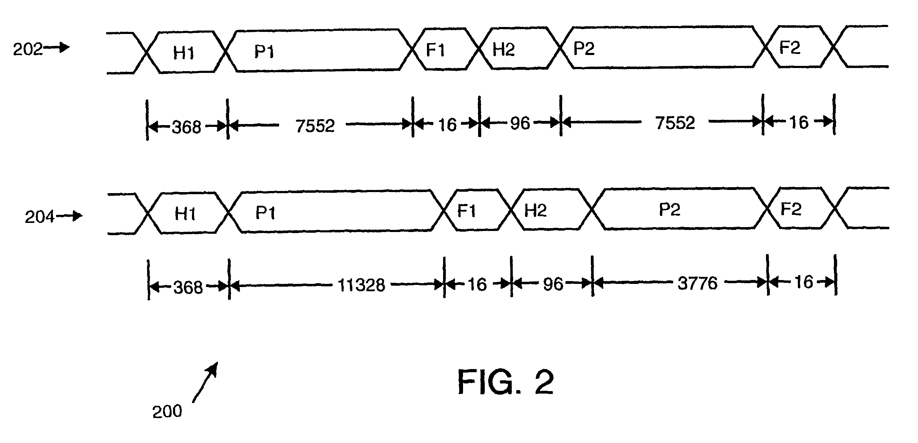

Turning next to Figure 2, that figure provides an illustration of two downlink frames 200 that have a fixed downlink frame size, and a fixed total payload size. With regard to the first downlink frame, 202, the first and second payloads are the same size, even though payload 1 may be formed from 24 ATM cells encoded with a (236, 212) Reed-Solomon outer code and a rate 3/4 inner convolutional code, while payload 2 maybe formed by 12 ATM cells encoded with a (236, 212) Reed-Solomon outer code and a rate 3/8 inner convolutional code. Other inner code rates may be paired with the same Reed-Solomon outer code to generate a 7552 symbol payload. For example, a rate 1/8 code may be used to code 4 ATM cells, a rate 1/4 inner code may code 8 ATM cells, a rate 1/2 may code 16 cells, a rate 5/8 inner code may code 20 cells, or a rate 7/8 code may code 28 cells.

The next downlink frame 204, illustrates the option of varying the payload lengths under the constraint of the sum of the payload lengths being constant. The first payload signal P1 has been lengthened to 11328 symbols based on 36 ATM cells encoded with a (236, 212) Reed-Solomon outer code and a rate 3/4 convolutional inner code. The second payload signal P2 has been correspondingly shortened to 3776 symbols based on 4 ATM cells encoded with a (236, 212) Reed-Solomon outer code and a rate 1/4 convolutional inner code. A fixed total payload size of 15104 symbols and a fixed downlink frame size of 15600 symbols is therefore maintained.

Heavy coding (a (236, 212) outer code followed by a 3/8 rate inner code on 12 53-byte ATM cells) and light coding (a (236, 212) outer code followed by a 3/4 rate inner code on 24 53-byte ATM cells) are two specific examples of different codes that may be applied to payload data. However, there are many more code possibilities that may be applied to satisfy the general constraints that the total payload size remain constant and that the downlink frame size remain constant. To that end, the codes may be independently selected from concatenated codes, block codes (e.g., Reed-Solomon or BCH), convolutional codes, and the like.

For example, Table 3, below, summarizes several possibilities for maintaining a fixed total payload size of 15104 QPSK symbols given a (236, 212) Reed Solomon outer code and a punctured convolutional inner code with a rate of 1/4, 3/8, 1/2, 5/8, 3/4, 7/8, or 1 (i.e., effectively no inner code). Note, however, that the present coding techniques are not limited to the aforementioned codes. Rather, similar tables may be constructed for alternate inner codes and outer codes. In particular, it is not necessary for the payloads to be a fixed size; it is sufficient for the sum of the lengths of the payload and the associated flush field to be a fixed size. Thus, in Table 3, there are additional cases which are not listed in which the payload size may appear to include fractional QPSK symbols, but for which the sum of the lengths of the flush and the payload fields satisfies the length constraint.

Table 3

| Payload Size | Inner Code Rate | | | | | | | |
|---|---|---|---|---|---|---|---|---|
| | 1/8 | 1/4 | 3/8 | 1/2 | 5/8 | 3/4 | 7/8 | 1 |
| QPSK Symbols | Number of 53-Byte ATM Cells | | | | | | | |
| 944 | | | | | | | | 4 |
| 1888 | | | | 4 | | | | 8 |
| 2832 | | | | | | | | 12 |
| 3776 | | 4 | | 8 | | 12 | | 16 |
| 4720 | | | | | | | | 20 |
| 5664 | | | | 12 | | | | 24 |
| 6608 | | | | | | | | 28 |
| 7552 | 4 | 8 | 12 | 16 | 20 | 24 | 28 | 32 |
| 8496 | | | | | | | | 36 |
| 9440 | | | | 20 | | | | 40 |
| 10384 | | | | | | | | 44 |
| 11328 | | 12 | | 24 | | 36 | | 48 |
| 12272 | | | | | | | | 52 |
| 13216 | | | | 28 | | | | 56 |
| 14160 | | | | | | | | 60 |

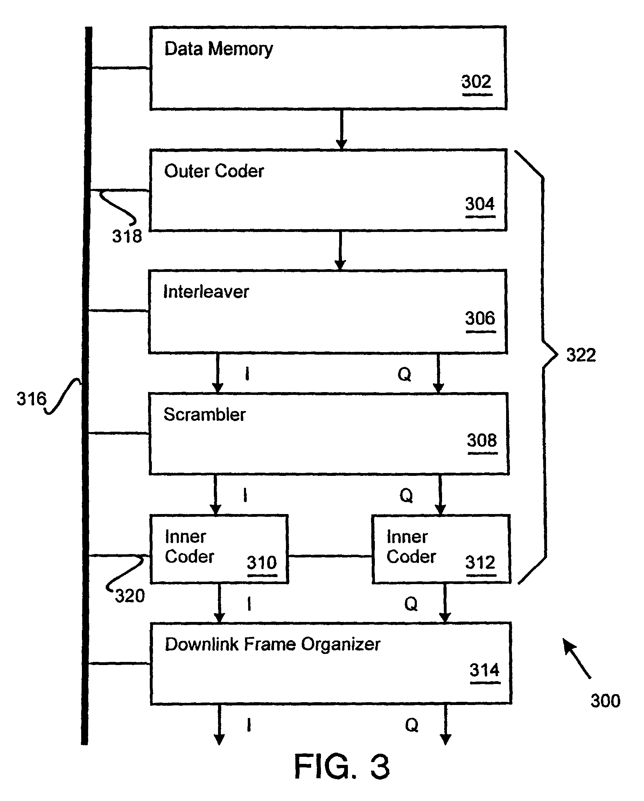

As one example, the first payload field 104 may carry four 53-byte ATM cells coded with a (236, 212) outer code and rate 1/4 inner code (requiring 3776 symbols). Then, the second payload field 110 may carry 24 53-byte ATM cells coded with the (236, 212) outer code and rate 1/2 inner code (requiring 11328 symbols). The fixed total payload size of 15104 QPSK symbols is maintained. As an additional example, the first payload field may carry 24 53-byte ATM cells coded with a (236, 212) outer code and rate 1 inner code (requiring 5664 symbols). The second payload field 110 may then carry 20 53-byte ATM cells coded with the (236, 212) outer code and rate 1/2 inner code (requiring 9440 symbols). Turning next to Figure 3, that figure illustrates one embodiment of a frame coding and processing module 300. The coding module 300 includes a data memory 302, an outer coder 304, and an interleaver 306. The coding module 300 also includes a scrambler 308, an I convolutional encoder 310 and corresponding Q convolutional encoder 312, and a downlink frame organizer 314. A data and control bus 316 provides code selection signals that control the operation of the coding module 300, including, for example, selection of outer codes and inner codes (e. g., (n,k) Reed-Solomon or BCH block codes and convolutional codes with rates of 1/8, 1/4, 3/8, 1/2, 5/8, 3/4, 7/8, and 8/8), as well as provision of frame overhead information (e.g., code identifiers) for the downlink frame organizer 314.

To that end, the outer coder 304 includes an outer code selection input 318 while the inner coders 310, 312 include inner code selection inputs 320. The outer coder 304, interleaver 306, scrambler 308, and inner coders 310, 312 are indicated generally in Figure 3 as the data coder 322. While the outer coder 304, interleaver 306, scrambler 308, and inner coders 310, 312 are preferably used in concert, one or more may be omitted, or other processing modules added. In other words, the data coder 322 may include more or less complexity than the exemplary implementation shown in Figure 3.

The data memory 302 preferably stores 53 byte ATM cells. However, any particular data format may be used to supply the outer coder 304 with payload data. The interleaver 306, which accepts outer coded data, interleaves the outer coded data bits to reduce the detrimental effects of burst errors that may occur after transmission. In addition, after the coding module 300 reads I and Q data bits out of the interleaver 306, the I and Q data bits are scrambled with a pseudorandom noise scrambling sequence in the scrambler 308. The coding module 300 then convolutionally encodes the scrambled I and Q data bits and presents the coded data to the downlink frame organizer 314.

The downlink frame organizer 314 inserts the coded data into the frame 100 as described above to preferably maintain a fixed downlink frame size and a fixed total payload size. The downlink frame organizer 314 also inserts overhead information including code identifiers, synchronization bits, a guard band, a frame count, and the like into the frame 100. The downlink frame organizer 314, as it builds the frame 100, passes frame bits to a downlink modulator (not shown) that creates the frame waveform for amplification and transmission.

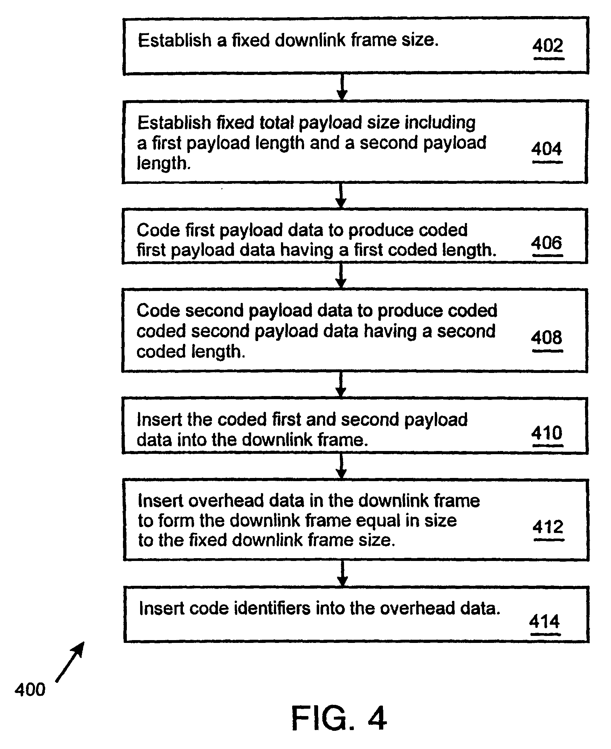

Turning next to Figure 4, that figure illustrates a flow diagram 400 of a method for coding a multiple payload frame that summarizes the discussion above. The method includes establishing 402 a fixed downlink frame size (e. g., 15600 symbols). The method also includes establishing 404 a fixed total payload size (e.g., 15104 symbols), optionally including a first payload length (e.g., 7552 symbols) and a second payload length (e.g., 7552 symbols).

Next, the method codes 406 first payload data (e.g., 53-byte ATM cells) to produce coded first payload data having a first coded length. The method also codes 408 second payload data (e.g., 53-byte ATM cells) to produce coded second payload data having a second coded length. Once the coded payload data is available, the method inserts 410 the coded payload data into the downlink frame. In addition, the method inserts 412 overhead data in the downlink frame to form the downlink frame equal in size to the fixed downlink frame size.

As illustrated above in Figure 2, the payload signals in the downlink frame may remain a constant length (and shared if necessary), or may be variable in size. To this end, the method also inserts 414 code identifiers into the overhead data. The code identifiers allow the ground terminals to determine the code applied to the first and second payload data, and whether the payload signals are constant size, shared, or of a variable size determined according to the code applied.

In general, the discussion above applies to frames with N payloads. In other words, each of N payloads may have a unique code applied to the data that becomes the coded data for that payload. While the N payloads generally provide a fixed total payload size, any of the N payloads may remain fixed in size (and share symbols if necessary) or may vary in size.

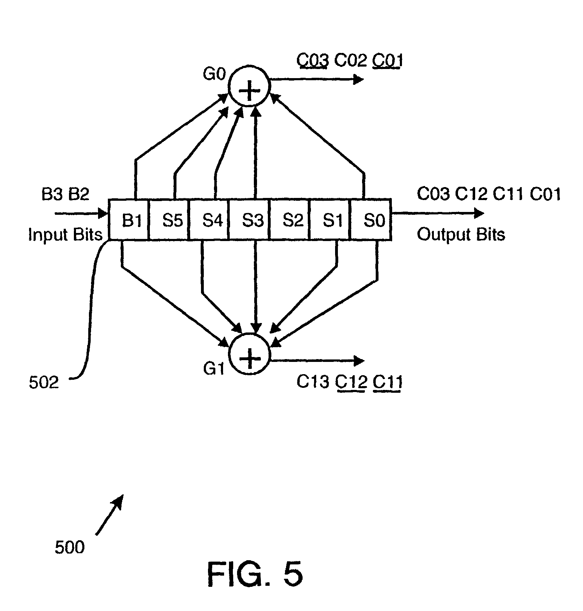

Turning next to Figure 5, that figure illustrates a light coding convolutional encoder 500. The convolutional encoder 500 provides a 3/4 rate, constraint length 7 convolutional code with a puncturing pattern of |g0|g1|g1g0| read right to left, where "|" delimits bit input epochs. The modulo two adders G0 and G1, and shift register 502 implement:

$$C01 = B1 + S5 + S4 + S3 + S0$$

$$C11 = B1 + S4 + S3 + S1 + S0$$

$$C12 = B2 + S5 + S4 + S2 + S1$$

$$C03 = B3 + B2 + B1 + S5 + S2$$

with generators G0 = [1111001] and G1 = [1011011].

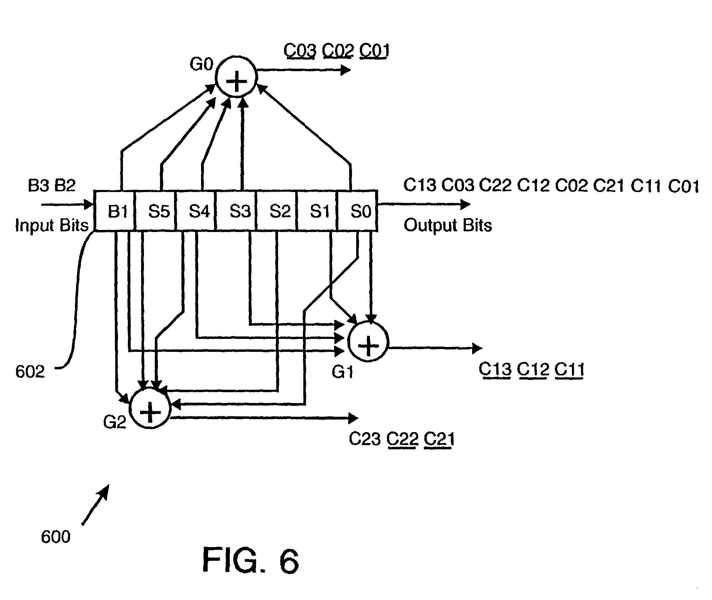

With regard to Figure 6, that figure illustrates a heavy coding convolutional encoder 600. The convolutional encoder 600 provides a 3/8 rate, constraint length 7 convolutional code with a puncturing pattern of |g1g0|g2g1g0|g2g1g0| read right to left, where "|" delimits bit input epochs. The modulo two adders G0, G1, G2, and shift register 602 implement:

$$C01 = B1 + S5 + S4 + S3 + S0$$

$$C11 = B1 + S4 + S3 + S1 + S0$$

$$C21 = B1 + S5 + S4 + S2 + S0$$

$$C02 = B2 + B1 + S5 + S4 + S1$$

$$C12 = B2 + S5 + S4 + S2 + S1$$

$$C22 = B2 + B1 + S5 + S3 + S1$$

$$C03 = B3 + B2 + B1 + S5 + S2$$

$$C13 = B3 + B1 + S5 + S3 + S2$$

with generators G0 = [1111001], G1 = [1011011], G2 = [1110101].

While the invention has been described with reference to a preferred embodiment, those skilled in the art will understand that various changes may be made and equivalents may be substituted without departing from the scope of the invention. In addition, many modifications may be made to adapt a particular step, structure, or material to the teachings of the invention without departing from its scope. Therefore, it is intended that the invention not be limited to the particular embodiment disclosed, but that the invention will include all embodiments falling within the scope of the appended claims.

**Claims**

1. A method for coding a multiple payload frame, the method comprising:

   establishing a fixed downlink frame size;

   coding first payload data according to a first code to produce coded first payload data having a first coded length;

   inserting the coded first payload data in the downlink frame;

   coding second payload data according to a second code to produce coded second payload data having a second coded length;

   inserting the coded second payload data in the downlink frame; and

   inserting first overhead data in the downlink frame to form the downlink frame equal in size to the fixed downlink frame size.

2. The method of claim 1, further comprising:
   establishing a fixed total payload size inside the downlink frame;
   wherein the sum of the first coded length and the second coded length is equal to the fixed total payload size.

3. The method of claim 2, wherein the first coded length and the second coded length are equal numbers of downlink symbols.

4. The method of claim 3, wherein coding first payload data comprises concatenated coding the first payload data, and wherein coding second payload data comprises concatenated coding the second payload data.

5. The method of claim 4, wherein the first and second coded lengths are maintained constant for subsequent frames.

6. The method of claim 2, wherein establishing a payload length constant further comprises establishing a first payload length and a second payload length.

7. The method of claim 2, further comprising the step of inserting a code identifier into the first overhead information indicative of at least one of the first and second code rate.

8. The method of claim 2, further comprising:

  inserting a first code identifier indicative of the first code into the first overhead information;

  inserting second overhead data for the second payload data in the downlink frame; and

  inserting a second code identifier into the second overhead information indicative of the second code.

9. The method of claim 4, wherein concatenated coding the first payload data includes (236, 212) block code outer coding the first payload data, and
wherein concatenated coding the second payload data includes (236, 212) block code outer coding the second payload data.

10. The method of claim 9, wherein the first payload data and the second payload data comprise ATM cells.

11. The method of claim 9 , wherein concatenated coding the first payload data includes convolutional coding with at least one of a rate 1/8, 2/8, 3/8, 4/8, 5/8, 6/8, 7/8, and 8/8 convolutional code.

12. A frame coding module comprising:

  a data coder having a code selection input;

  a downlink frame organizer connected to the data coder, the downlink frame organizer configured to produce a fixed size downlink frame; and

  a control bus coupled to the code selection input and carrying a first code selection signal for first payload data, and a second code selection signal for second payload data,

  the data coder responsive to the code selection input to produce coded first payload data having a first coded length and coded second payload data having a second coded length,

   wherein the downlink frame organizer inserts the coded first payload data, the coded second payload data, and overhead data in the downlink frame to form the downlink frame equal in size to the fixed downlink frame size.

13. The frame coding module of claim 12, wherein the data coder comprises:

  an outer coder having an outer code rate selection input coupled to the control bus; and

  an inner coder coupled to the outer coder, the inner coder having an inner code rate selection input coupled to the control bus.

14. The frame coding module of claim 13 , wherein the outer coder is a (236, 212) outer coder and
wherein the inner coder is a convolutional coder that applies a selectable 1/8, 2/8, 3/8, 4/8, 5/8, 6/8, 7/8, or 8/8 rate convolutional code.

15. The frame coding module of claim 12 , wherein the fixed size downlink frame is **characterized by** a fixed total payload size inside the downlink frame and
wherein the first coded length plus the second coded length is equal to the fixed total payload size.

16. The frame coding module of claim 14, further comprising a payload data memory coupled to the data coder, the payload data memory storing 53 byte ATM cells.

17. The frame coding module of claim 12 , wherein the control bus carries a third code selection signal for third payload data, and wherein the data coder is responsive to the code selection input to produce coded third payload data having a third coded length,
   wherein the downlink frame organizer inserts the coded first payload data, the coded second payload data, the coded third payload data, and the overhead data in the downlink frame to form the downlink frame equal in size to the fixed downlink frame size.

**18.** The frame coding module of claim 12 , wherein the overhead data includes a code identifier indicative of at least the first code and the second code.

**19.** The frame coding module of claim 12, wherein the overhead data includes a first payload header and a second payload header, and wherein the first payload header include a first code identifier and wherein the second payload header include a second code identifier.

**20.** A frame signal comprising:

    a first header signal;
    a first payload signal;
    and a second payload signal,

    wherein the first payload signal bears coded first payload data having a first coded length and prepared in accordance with a first code, and the second payload signal bears coded second payload data having a second coded length and prepared in accordance with a second code different than the first code, and
    wherein the first header signal, first payload signal, and second payload signal are encapsulated into a fixed length downlink frame.

**21.** The frame signal of claim 20, wherein the first coded length plus the second coded length remains constant for each frame signal.

**22.** The frame signal of claim 21 , wherein the first coded length varies between frame signals and wherein the first coded length plus the second coded length remains constant.

EP 1 168 699 A2

Downlink Frame 15600 Symbols @ 196.7 Msps

| | *102* | | *104* | *106* | *108* | | *110* | *112* |
|---|---|---|---|---|---|---|---|---|
| | Header1 | | Payload1 | Flush 1 | Header2 | | Payload2 | Flush 2 |

| 368 | 7552 | 16 | 7552 | 16 |
|---|---|---|---|---|

| *126* | *128* |
|---|---|
| PN Sync 2 | Frame Type2 |

| 64 | 32 |
|---|---|

| *114* | *116* | *118* | *120* | *122* | *124* |
|---|---|---|---|---|---|
| Guard Band | PN Sync 1 | Spare | Frame Type1 | MF Count | Frame Count |

| 114 | 64 | 62 | 32 | 32 | 64 |
|---|---|---|---|---|---|

100

FIG. 1

202→ | H1 | P1 | F1 | H2 | P2 | F2 |

|←368→|←——— 7552 ———→|←16→|←96→|←——— 7552 ———→|←16→|

204→ | H1 | P1 | F1 | H2 | P2 | F2 |

|←368→|←———— 11328 ————→|←16→|←96→|←——— 3776 ———→|←16→|

200

# FIG. 2

```
                    ┌─────────────────────────────┐
                    │  Data Memory                │
                    │                             │
                    │                       302   │
                    └─────────────┬───────────────┘
                                  │
                                  ▼
                    ┌─────────────────────────────┐
                    │  Outer Coder                │
                    │                             │
                    │                       304   │
             318    └─────────────┬───────────────┘
                                  │
                                  ▼
                    ┌─────────────────────────────┐
                    │  Interleaver                │
                    │                             │
                    │                       306   │
                    └──────┬──────────────┬───────┘
                           │ I            │ Q           322
                           ▼              ▼
      316           ┌─────────────────────────────┐
                    │  Scrambler                  │
                    │                             │
                    │                       308   │
                    └──────┬──────────────┬───────┘
                           │ I            │ Q
                           ▼              ▼
            ┌──────────────────┐  ┌──────────────────┐
            │  Inner           │  │  Inner           │
            │  Coder    310    │  │  Coder    312    │
            └─────┬────────────┘  └────────┬─────────┘
          320     │ I                      │ Q
                  ▼                        ▼
        ┌───────────────────────────────────────────┐
        │  Downlink Frame Organizer                 │
        │                                           │
        │                                  314      │
        └──────┬──────────────────────────┬─────────┘
               │ I                         │ Q          300
               ▼                           ▼
```

# FIG. 3

| | |
|---|---|
| Establish a fixed downlink frame size. | 402 |

↓

| | |
|---|---|
| Establish fixed total payload size including a first payload length and a second payload length. | 404 |

↓

| | |
|---|---|
| Code first payload data to produce coded first payload data having a first coded length. | 406 |

↓

| | |
|---|---|
| Code second payload data to produce coded coded second payload data having a second coded length. | 408 |

↓

| | |
|---|---|
| Insert the coded first and second payload data into the downlink frame. | 410 |

↓

| | |
|---|---|
| Insert overhead data in the downlink frame to form the downlink frame equal in size to the fixed downlink frame size. | 412 |

↓

| | |
|---|---|
| Insert code identifiers into the overhead data. | 414 |

400

# FIG. 4

FIG. 5

FIG. 6